# EUROPÄISCHE PATENTANMELDUNG

(11) **EP 3 670 399 A1**
(43) Veröffentlichungstag der Anmeldung: **24.06.2020**
(21) Anmeldenummer: 19217391.2
(22) Anmeldetag: 18.12.2019
(51) Int. Cl.: B65G 47/14

(54) **KASKADENFÖRDERER UND VERFAHREN ZUM SORTIEREN UND FÖRDERN VON BEHÄLTERVERSCHLÜSSEN**

(30) Priorität: 18.12.2018 DE 102018132637
(71) Anmelder: KRONES AG, 93073 Neutraubling (DE)
(72) Erfinder: Schaeffer, Tobias, 93073 Neutraubling (DE)
(74) Vertreter: Nordmeyer, Philipp Werner

(57) **Zusammenfassung**

Die vorliegende Erfindung betrifft einen Kaskadenförderer (1) zum Sortieren und Fördern von Behälterverschlüssen (2), bevorzugt zum Fördern und Sortieren von Schraubverschlüssen in einer Getränkeabfüllanlage, umfassend mindestens eine in einer Förderrichtung (F) bewegbare, quer zur Förderrichtung (F) orientierte Sortierleiste (3) zum Fördern der Behälterverschlüsse (2) von einer unsortierte Behälterverschlüsse (2) aufnehmenden Sammelaufnahme (10) hin zu einer Verschlussentladezone (11), wobei in der Verschlussentladezone (11) ein in Gravitationsrichtung (g) gesehen unterhalb der Sortierleiste (3) verlaufendes Transportband (6) zum seitlichen Ausräumen von durch die Sortierleiste (3) geförderten Behälterverschlüssen (2) vorgesehen ist.

## Beschreibung

### Technisches Gebiet

Die vorliegende Erfindung betrifft einen Kaskadenförderer zum Sortieren und Fördern von Behälterverschlüssen, bevorzugt zum Fördern und Sortieren von Schraubverschlüssen in einer Getränkeabfüllanlage, sowie ein entsprechendes Verfahren zum Sortieren und Fördern von Behälterverschlüssen, bevorzugt zum Fördern und Sortieren von Schraubverschlüssen in einer Getränkeabfüllanlage.

### Stand der Technik

In Getränkeabfüllanlagen ist es allgemein bekannt, befüllte Behälter mit Behälterverschlüssen zu verschließen, um diese für die weitere Verarbeitung und für den Transport zum Verbraucher fertig zu stellen. Es sind unterschiedliche Behälterverschlüsse bekannt wie beispielsweise Schraubverschlüsse, die als Kunststoffformteil bereitgestellt werden und auf ein Außengewinde im Mündungsbereich des befüllten Behälters aufgeschraubt werden. Weiterhin bekannt sind Kronkorken, die auf den befüllten Behälter aufgeformt werden. Bekannt sind weiterhin auch sogenannte Aufrollverschlüsse, bei denen eine Verschlusshülse auf ein auf der Außenseite einer Behältermündung ausgeformtes Gewinde aufgesetzt wird und dann mittels eines Aufrollverschließers die Verschlusshülse auf das Gewinde aufgeformt wird.

Bei allen Verschlusstypen werden die Behälterverschlüsse einer Verschließvorrichtung beziehungsweise einem Verschließer zum Verschließen der befüllten Behälter mit den Behälterverschlüssen zugeführt. Damit sichergestellt ist, dass die in einer separaten Vorrichtung oder Anlage hergestellten Behälterverschlüsse stets mit der korrekten Orientierung zu der Verschließvorrichtung gelangen, ist es bekannt, die Behälterverschlüsse im Vorfeld zu Sortieren.

Es ist beispielsweise bekannt, die Behälterverschlüsse mittels eines sogenannten Kaskadenförderers zu fördern und dabei zu sortieren. Dabei werden unsortierte Behälterverschlüsse aus einer Sammelaufnahme, beispielsweise in Form einer Wanne, mittels einer Leistenkette mit einer Vielzahl von Sortierleisten zu einer gegenüber der Sammelaufnahme höher gelegenen Verschlussübergabe gefördert. Auf der Förderstrecke zwischen der Sammelaufnahme und der Verschlussübergabe werden die sich auf den Sortierleisten befindlichen Behälterverschlüsse in einem Sortierbereich sortiert, in welchem die Sortierleisten derart geneigt sind, dass lediglich Behälterverschlüsse, welche mit ihrem Boden in Richtung der Sortierleisten weisen, aufgrund ihres Schwerpunkts in den Sortierleisten verbleiben. Behälterverschlüsse anderer Orientierung fallen aufgrund ihres außerhalb der Sortierleiste liegenden Schwerpunkts wieder zurück in die Sammelaufnahme und können erneut von einer der Sortierleisten aufgenommen und gefördert werden. Die dadurch sortierten Behälterverschlüsse werden nach Durchlaufen des Sortierbereichs von der Verschlussübergabe mit der vorbestimmten Orientierung an eine weitere Behandlungsvorrichtung der Getränkeabfüllanlage, beispielsweise einer weiteren Transportvorrichtung oder direkt einer Verschließvorrichtung, übergeben.

Zum seitlichen Ausschieben der Behälterverschlüsse aus den Sortierleisten an der Verschlussübergabe ist es bekannt, eine oder mehrere Druckluftdüsen vorzusehen und die Behälterverschlüsse mittels Druckluft beziehungsweise Druckluftstößen seitlich auszublasen. Ein solcher Kaskadenförderer ist beispielsweise der DE 10 2004 030 667 A1 zu entnehmen. Die Verwendung von Druckluft zum Ausschieben bedingt durch die aus den Düsen strömende Druckluft eine hohe Geräuschkulisse. Zudem muss die Druckluft durch eine eigens dafür vorgesehene Vorrichtung bereitgestellt werden. Dies ist aufwendig und teuer.

Ferner ist aus der US 3924732 A ein Kaskadensortierer bekannt, bei welchem Verschlusskappen lageorientiert zu einem querführenden Transsportband gefördert werden. Hierbei werden die Behälterverschlüsse durch die Sortierleisten aus deren Bewegungsbahn heraus an das neben dem Kaskadenförderer angeordnete Transportband übergeben. Fehlerhafte Behälterverschlüsse, beispielsweise verbogene Verschlüsse, können dabei in der Deckelschiene am Übergabepunkt hängen bleiben und so einen Stillstand verursachen. Ferner können sich fehlerhafte Verschlüsse an dem Schlitz zwischen dem Kaskadenförderer und dem daran anschließenden Transportband, durch welches die Förderkette umgelenkt wird, verklemmen und so ebenso einen Stillstand der Anlage verursachen.

### Darstellung der Erfindung

Ausgehend von dem bekannten Stand der Technik ist es eine Aufgabe der vorliegenden Erfindung, einen verbesserten Kaskadenförderer zum Sortieren und Fördern von Behälterverschlüssen, bevorzugt zum Fördern und Sortieren von Schraubverschlüssen in einer Getränkeanlage, sowie ein entsprechendes Verfahren bereitzustellen.

Die Aufgabe wird durch einen Kaskadenförderer zum Sortieren und Fördern von Behälterverschlüssen, bevorzugt zum Fördern und Sortieren von Schraubverschlüssen in einer Getränkeabfüllanlage, mit den Merkmalen des Anspruchs 1 gelöst. Vorteilhafte Weiterbildungen ergeben sich aus den Unteransprüchen, der Beschreibung und den beigefügten Figuren.

Entsprechend wird ein Kaskadenförderer zum Sortieren und Fördern von Behälterverschlüssen, bevorzugt zum Fördern und Sortieren von Schraubverschlüssen in einer Getränkeabfüllanlage, vorgeschlagen, umfassend mindestens eine in einer Förderrichtung bewegbare, quer zur Förderrichtung orientierte Sortierleiste zum Fördern der Behälterverschlüsse von einer unsortierte Behälterverschlüsse aufnehmenden Sammelaufnahme hin zu einer Verschlussentladezone. Der Kaskadenförderer kennzeichnet sich darin, dass in der Verschlussentladezone ein in Gravitationsrichtung gesehen unterhalb der Sortierleiste verlaufendes Transportband zum seitlichen Ausräumen von durch die Sortierleiste geförderten Behälterverschlüssen vorgesehen ist.

Indem in der Verschlussentladezone ein in Gravitationsrichtung gesehen unterhalb der Sortierleiste verlaufendes Transportband zum seitlichen Ausräumen von durch die Sortierleiste geförderten Behälterverschlüssen vorgesehen ist, kann der hier vorgeschlagene Kaskadenförderer gegenüber den aus dem Stand der Technik bekannten Lösungen leiser betrieben werden. Dies gilt insbesondere für Vorrichtungen, bei denen zum Bewegen der Behälterverschlüsse von den Sortierleisten in die Abfuhrrinne Druckluft oder eine Ansaugvorrichtung zum Einsatz kommt.

Zudem kann die Gefahr eines Stillstands der Anlage aufgrund eines Verklemmens eines fehlerhaften Behälterverschlusses oder eines Aufstauens von Behälterverschlüssen an der bei Vorrichtungen aus dem Stand der Technik erforderlichen Verschlussübergabe zu einer weiter transportierenden Einheit reduziert werden.

Ein derart aufgebauter Kaskadenförderer kann ferner im Vergleich zu herkömmlichen Kaskadenförderern kompakter aufgebaut sein, da das Transportband nicht neben dem Kaskadenförderer separat zu diesem vorgesehen ist, sondern in diesen eingearbeitet beziehungsweise integriert ist.

In der Verschlussentladezone schiebt die Sortierleiste eines derart aufgebauten Kaskadenförderers die Behälterverschlüsse auf das Transportband. Da das Transportband in Gravitationsrichtung unterhalb der Sortierleiste angeordnet ist, liegen die Behälterverschlüsse mit ihrem Gewicht im Wesentlichen auf dem Transportband. Bei einer Bewegung des Transportbandes in Transportrichtung quer zur Förderrichtung bewegt das Transportband mithin aufgrund des Gewichts der Behälterverschlüsse und der Reibung zwischen Transportband und Behälterverschluss die Behälterverschlüsse in Transportrichtung, sodass sie seitlich aus dem Bereich der Sortierleiste heraus bewegt, anders ausgedrückt ausgeräumt werden.

Bevorzugt weist der Kaskadenförderer eine Zahl von im Wesentlichen hintereinander angeordneten Sortierleisten auf. Dadurch kann durch den Kaskadenförderer entsprechend der Anzahl an Sortierleisten eine entsprechend größere Anzahl an Behälterverschlüssen simultan gefördert werden.

Gemäß einer weiter bevorzugten Ausführungsform überquert die Sortierleiste das Transportband in Förderrichtung vollständig. Es hat sich herausgestellt, dass dadurch eine nochmals verbesserte Zuverlässigkeit des Kaskadenförderers hinsichtlich des Ausräumens der Behälterverschlüsse von der Sortierleiste möglich sein kann.

Vorzugsweise ist das Transportband in einer Transportrichtung bewegbar, wobei die Transportrichtung und die Förderrichtung einen Winkel größer 0° einschließen, bevorzugt größer 0° bis kleiner gleich 120°. Mit anderen Worten ist der Begriff "quer zur Förderrichtung" derart zu verstehen, dass die Förderrichtung mit der Transportrichtung einen Winkel ungleich 0° einschließen. Hierdurch kann sichergestellt werden, dass die durch die Sortierleiste geförderten Behälterverschlüssen in der Verschlussentladezone in Förderrichtung gesehen seitlich von der Sortierleiste ausgeräumt werden.

Gemäß einer bevorzugten Weiterführung weist der Winkel einen Wert zwischen 90° und 105° auf, bevorzugt einen Wert zwischen 90° und 100°, besonders bevorzugt 95° oder 100°.

Wenn der Winkel zwischen Förderrichtung und Transportrichtung entsprechend einer bevorzugten Ausführungsform ungleich 90° ist, kann erreicht werden, dass das Transportband nicht zeitgleich mit allen durch eine Sortierleiste geförderten Behälterverschlüssen Kontakt tritt, sondern dies zeitversetzt erfolgt. Dadurch kann sichergestellt werden, dass das Transportband entsprechend zeitversetzt anfängt, die einzelnen Behälterverschlüsse zu transportieren. Hierdurch kann sich beispielsweise ein Aufstauen von Behälterverschlüssen vermindern oder gar gänzlich verhindern lassen.

Eine hinsichtlich des Ausräumens der Behälterverschlüsse von der Sortierleiste durch das Transportband besonders vorteilhafte bevorzugte Ausführungsform ist gegeben, wenn das Transportband im Wesentlichen horizontal ausgerichtet ist. Da sich die Sortierleiste der Behälterverschlüsse durch das Transportband über das Transportband weiterbewegt, kommt es durch diese Bewegung der Sortierleiste zu einem Verschieben der Behälterverschlüsse auf dem Transportband quer zur Transportrichtung. Bei einer horizontalen Ausrichtung des Transportbandes kann sich ein gutes Verhältnis zwischen einem Ausräumverhalten durch das Transportband sowie einer Verschiebbarkeit der Behälterverschlüsse auf dem Transportband in Förderrichtung ergeben.

Gemäß einer weiter bevorzugten Ausführungsform ist die Sortierleiste entlang einer Bewegungsbahn bewegbar, welche die Sammelaufnahme , einen Sortierbereich und die Verschlussentladezone umfasst, wobei die Bewegungsbahn im Bereich der Verschlussentladezone im Vergleich zu dem in Förderrichtung voranstehend angeordneten Sortierbereich eine geringere Steigung aufweist, und wobei insbesondere die Bewegungsbahn im Bereich der Verschlussentladezone einen Neigungswinkel zwischen 0° und 30°, bevorzugt 0° und 5°, aufweist, wobei besonders bevorzugt die Bewegungsbahn im Bereich des Transportbandes horizontal ausgerichtet ist.

In dem Sortierbereich weist die Bewegungsbahn des mit den Sortierleisten ausgestatteten Kaskadenförderers eine ausreichende Steigung auf, die ein Sortieren der in den Sortierleisten aufgenommenen Behälterverschlüsse unter Ausnutzung der Schwerkraft ermöglicht. Dies erfolgt, indem aufgrund einer asymmetrischen Schwerpunktlage der Behälterverschlüsse beim Durchlaufen des Sortierbereichs nur die Behälterverschlüsse in den Sortierleisten gehalten werden, die eine ordnungsgemäße beziehungsweise vorgegebene Orientierung aufweisen. Fehlerhaft orientierte Behälterverschlüsse fallen hingegen aufgrund ihrer außerhalb der Sortierleiste angeordneten Schwerpunktlage zurück in die Sammelaufnahme. Um ein Herausfallen fehlerhaft orientierter Behälterverschlüsse aus der Sortierleiste zu fördern, kann in dem Sortierbereich ein ruckartiges Bewegen der Sortierleisten hervorgerufen werden. Dies kann beispielsweise durch eine Sortierschwelle in der Bewegungsbahn des Kaskadenförderers erreicht werden.

Um sicherzustellen, dass alle durch die Sortierleiste geförderten und sortierten Behälterverschlüsse durch das Transportband ausgeräumt werden, erstreckt sich das Transportband vorzugsweise über die gesamte Breite der Sortierleiste hinweg quer zur Förderrichtung.

Das Transportband erstreckt sich bevorzugt ferner in Transportrichtung gesehen über die Breite der Sortierleiste hinaus entlang eines Abtransportabschnitts zum Abtransportieren von aus der Sortierleiste ausgeräumter Behälterverschlüsse. Hierdurch kann mittels des Transportbandes ferner ein Weitertransportieren der ausgeräumten Behälterverschlüsse bereitgestellt werden, beispielsweise zu einem Verschlusspuffer und/oder einer Behälterverschließvorrichtung, in welcher Behälter mit den Behälterverschlüssen verschlossen werden. Dadurch kann auf eine im Stand der Technik erforderliche zusätzliche, zwischen dem Kaskadenförderer und dem Verschlusspuffer beziehungsweise der Behälterverschließvorrichtung vorzusehende Transporteinheit verzichtet werden. Mithin trägt ein derart aufgebauter Kaskadenförderer zu einem vereinfachten Aufbau einer mit solch einem Kaskadenförderer ausgestatteten Anlage bei.

Vorzugsweise erstreckt sich eine Auflage zum Führen der Behälterverschlüsse während des Förderns durch die Sortierleiste zumindest zwischen der Sammelaufnahme und dem Transportband, wobei die Auflage bevorzugt im Wesentlichen die Bewegungsbahn abbildet, wobei sich das Transportband in Förderrichtung gesehen bevorzugt direkt an die Auflage anschließt und/oder die Auflage das Transportband teilweise überlappt. Durch die Auflage kann ein Führen der Behälterverschlüsse während des Förderns und Sortieren der Behälterverschlüsse durch die Sortierleiste bereitgestellt werden. Mit anderen Worten kann mittels der Sortierleiste und der Auflage ein Bewegungspfad der Behälterverschlüsse vorgegeben werden. Der Bewegungspfad korrespondiert dabei im Wesentlichen mit der Bewegungsbahn.

Zum Fördern der Sortierleiste ist vorzugsweise eine Fördereinheit, bevorzugt eine Förderkette, vorgesehen, wobei die Fördereinheit bevorzugt in Gravitationsrichtung gesehen oberhalb der sich zumindest zwischen der Sammelaufnahme und dem Transportband erstreckenden Auflage zum Führen der Behälterverschlüsse während des Förderns durch die Sortierleiste angeordnet ist.

Die Sortierleiste erstreckt sich vorzugsweise von der Fördereinheit in Richtung der Auflage, wobei die Sortierleiste bevorzugt mit einem vorgegebenen Abstand zur Auflage und/oder zum Transportband mittels der Fördereinheit gefördert wird, und/oder, dass die Sortierleiste zumindest in einem Teilbereich der Bewegungsbahn auf der Auflage aufliegt und/oder auf dieser geführt ist.

Zumindest im Bereich des Transportbandes weist die Fördereinheit wenigstens auf der Seite der Sortierleiste, an welcher die Behälterverschlüsse von der Sortierleiste ausgeräumt werden, zum Transportband einen Abstand auf, der größer ist als eine maximale Höhe der durch die Sortierleiste geförderten und sortierten Behälterverschlüsse. Bevorzugt ist der Abstand dabei derart bemessen, dass er die maximale Höhe und zusätzlich einen Sicherheitsbetrag beziehungsweise einen vorgegebenen Toleranzwert beinhaltet.

Gemäß einer weiter bevorzugten Ausführungsform kann die Fördereinheit entlang der Bewegungsbahn zwischen der Sammelaufnahme und dem Transportband zur Auflage und/oder dem Transportband einen vorgegebenen bevorzugt gleichbleibenden Abstand aufweisen. Hierdurch kann erzielt werden, dass das Fördern und das Sortieren der Behälterverschlüsse besonders gleichmäßig erfolgt.

Die Sortierleiste kann vorzugsweise eine sich an die Bewegungsbahn anschließende Rücktransportbahn aufweisen, wobei die Bewegungsbahn und die Rücktransportbahn bevorzugt eine geschlossene Bewegungskurve ausbilden. Der Kaskadenförderer kann mithin in Form eines kontinuierlichen Kaskadenförderers bereitgestellt sein. Im Sinne der vorliegenden Offenbarung beschreibt der Begriff "kontinuierlicher Kaskadenförderer" einen Endlosförderer, der fortlaufend entlang der Förderrichtung betätigbar ist. Hierzu kann der Kaskadenförderer beziehungsweise die Fördereinheit entlang der geschlossenen Bewegungskurve bewegt werden. Beispielsweise kann die Fördereinheit umlaufend um wenigstens zwei Umlenkrollen bewegt werden.

Um einen besonders kompakten Aufbau des Kaskadenförderers zu erzielen, kann das Transportband vorzugsweise durch die Bewegungskurve umschlossen sein. Bei dieser Ausführungsform ist die Rücktransportbahn mithin in Rotationsrichtung gesehen im Wesentlichen unterhalb der Bewegungsbahn angeordnet.

In einer alternativen bevorzugten Ausführungsform kann sich die Rücktransportbahn in Gravitationsrichtung gesehen im Wesentlichen oberhalb der Bewegungsbahn erstrecken. Gemäß dieser Ausführungsform können die Sortierleisten von dem Transportband nach oben hin weg bewegt werden, sodass die Gefahr eines oben beschriebenen Verklemmens weiter reduziert werden kann.

Gemäß einer weiter bevorzugten Ausführungsform ist eine Inspektionseinheit zum Inspizieren von auf dem Transportband transportierten, aus der Sortierleiste ausgeräumten Behälterverschlüssen vorgesehen. Durch die Inspektionseinheit können beispielsweise fehlerhaft orientierte, schmutzige, oder fehlerhafte, wie etwa verbogene oder verformte Behälterverschlüsse erkannt werden.

Die Inspektionseinheit kommuniziert bevorzugt mit einer Entferneinheit zum Entfernen von ausgeräumten Behälterverschlüssen von dem Transportband, wobei die Entferneinheit dazu eingerichtet ist, durch die Inspektionseinheit als fehlerhaft auf dem Transportband orientierte und/oder als fehlerbehaftet erkannte ausgeräumte Behälterverschlüsse von dem Transportband zu entfernen. Als vorteilhaft hat sich herausgestellt, wenn die Entferneinheit hierzu einen mechanischen Auswerfer oder einen pneumatischen Auswerfer aufweist, welcher einen als fehlerhaft erkannten Behälterverschluss quer zur Transportrichtung von dem Transportband auswirft beziehungsweise entfernt.

In einer Weiterbildung kann die Entferneinheit auch mehr als einen Auswerfer aufweisen und/oder eine Weiche aufweisen, sodass sich fehlerhaft orientierte, aber ansonsten ordnungsgemäß ausgebildete Behälterverschlüsse zurück in die Sammelaufnahme führen lassen, und fehlerhafte, etwa schmutzige Behälterverschlüsse ausgeschleust oder einer Behälterverschluss-Reinigungsvorrichtung zugeführt werden können.

Gemäß einer weiter bevorzugten Ausführungsform kann die Bewegungsbahn auch lediglich die Sammelaufnahme und die Verschlussentladezone aufweisen, wenn eine Inspektionseinheit und eine Entferneinheit vorgesehen sind. Der Kaskadenförderer kann dann lediglich dazu eingerichtet sein, die Behälterverschlüsse zu fördern, sodass nach dem Ausräumen der Behälterverschlüsse durch das Transportband die ausgeräumten Behälterverschlüsse auf dem Transportband zueinander einen im Wesentlichen gleichen beziehungsweise zumindest ähnlichen Abstand aufweisen. Das Sortieren kann dann gänzlich durch die Kombination von Inspektionseinheit und Entferneinheit erfolgen. Ein derart ausgebildeter Kaskadenförderer kann besonders kompakt ausgebildet sein, da der Bereich der Sortierleiste, in welchem insbesondere ein Höhenfördern erfolgt, ausgespart sein kann.

Die obengenannte Aufgabe wird ferner durch ein Verfahren zum Sortieren und Fördern von Behälterverschlüssen, bevorzugt zum Fördern und Sortieren von Schraubverschlüssen in einer Getränkeabfüllanlage mit den Merkmalen des Anspruchs 14 gelöst. Bevorzugte Weiterbildungen ergeben sich aus den Unteransprüchen, der Beschreibung und den Figuren.

Entsprechend wird ein Verfahren zum Sortieren und Fördern von Behälterverschlüssen, bevorzugt zum Fördern und Sortieren von Schraubverschlüssen in einer Getränkeabfüllanlage, vorgeschlagen, umfassend das Fördern der Behälterverschlüsse mittels mindestens einer in einer Förderrichtung bewegbaren, quer zur Förderrichtung orientierten Sortierleiste von einer unsortierte Behälterverschlüsse aufnehmenden Sammelaufnahme hin zu einer Verschlussentladezone. In der Verschlussentladezone erfolgt ein seitliches Ausräumen der geförderten Behälterverschlüsse mittels eines in Gravitationsrichtung gesehen unterhalb der Sortierleiste verlaufenden Transportbandes.

Durch das Verfahren können die hinsichtlich der Vorrichtung beschriebenen Vorteile und Wirkungen analog erzielt werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Seitenansicht eines Kaskadenförderers zum Sortieren und Fördern von Behälterverschlüssen gemäß einer bevorzugten Ausführungsform;
- Figur 2: schematisch eine Draufsicht auf eine Verschlussentladezone des Kaskadenförderers aus Figur 1;
- Figur 3: schematisch eine Vorderansicht der Verschlussentladezone aus Figur 2;
- Figur 4: schematisch eine Vorderansicht einer Verschlussentladezone eines Kaskadenförderers gemäß einer weiteren Ausführungsform;
- Figur 5: schematisch eine Draufsicht einer Verschlussentladezone eines Kaskadenförderers gemäß einer weiteren Ausführungsform;
- Figur 6: schematisch eine weitere Draufsicht der Verschlussentladezone aus Figur 5; und
- Figur 7: schematisch eine Seitenansicht eines Kaskadenförderers gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

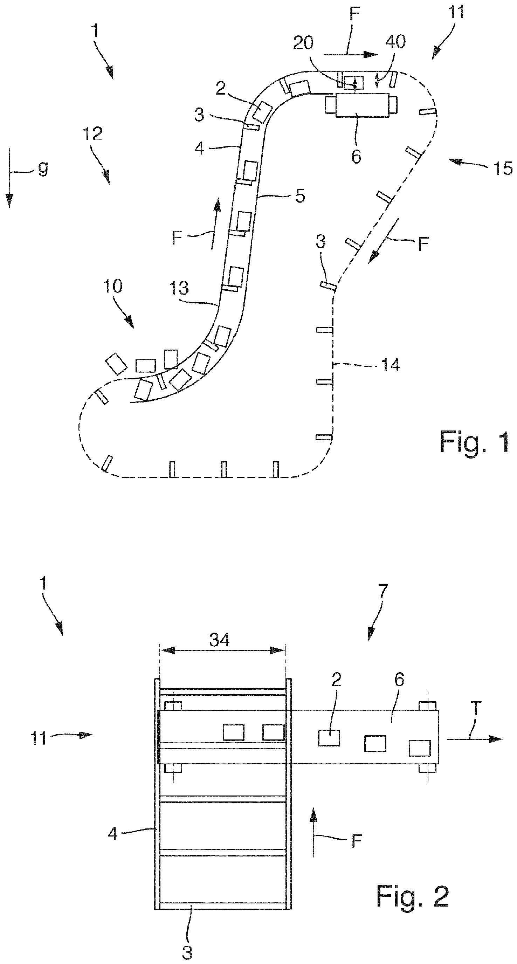

In Figur 1 ist schematisch eine Seitenansicht eines Kaskadenförderers 1 zum Sortieren und Fördern von Behälterverschlüssen 2 gemäß einer bevorzugten Ausführungsform gezeigt. Der Kaskadenförderer 1 umfasst eine Vielzahl von in eine Förderrichtung F bewegbare, quer zur Förderrichtung F orientierte Sortierleisten 3 zum Fördern der Behälterverschlüsse 2 von einer unsortierte Behälterverschlüsse 2 aufnehmenden Sammelaufnahme 10 hin zu einer Verschlussentladezone 11.

Die Sortierleisten 3 sind entlang einer Bewegungsbahn 13 bewegbar, welche die Sammelaufnahme 10, einen Sortierbereich 12 und die Verschlussentladezone 11 umfasst. In Förderrichtung F gesehen schließt sich an die Bewegungsbahn 13 eine Rücktransportbahn 14 an, in welcher Sortierleisten 3, welche die Verschlussentladezone 11 durchquert haben, zurück zur Sammelaufnahme 10 gefördert werden. Die Bewegungsbahn 13 und die Rücktransportbahn 14 bilden dabei eine geschlossene Bewegungskurve 15 aus. Der Kaskadenförderer 1 ist mithin als kontinuierlicher Kaskadenförderer ausgebildet.

Die Sortierleisten 3 sind zum Aufnehmen jeweils mehrerer Behälterverschlüsse 2 aus der Sammelaufnahme 10 und zum Fördern derselben zu der Verschlussentladezone 11 ausgebildet. Dabei durchlaufen die Sortierleisten 3 jeweils den Sortierbereich 12, indem ein Sortieren der in den Sortierleisten 3 aufgenommenen Behälterverschlüsse 2 erfolgt. Hierzu werden die Sortierleisten 3 in dem Sortierbereich 12 derart gefördert, dass lediglich Behälterverschlüsse 2, welche mit ihrem Boden in Richtung einer Auflage 5, über welche die Behälterverschlüsse 2 durch die Sortierleisten 3 in ihrem Weg von der Sammelaufnahme 10 zur Verschlussentladezone 11 gleitend geführt werden, aufgrund ihrer Schwerpunktlage in den Sortierleisten 3 verbleiben. Behälterverschlüsse 2 einer anderen Orientierung und entsprechend mit einem außerhalb der Sortierleiste 3 liegenden Schwerpunkt fallen wieder zurück in die Sammelaufnahme 10 und können erneut von einer der Sortierleisten 3 beim Durchqueren der Sammelaufnahme 10 aufgenommen und gefördert werden.

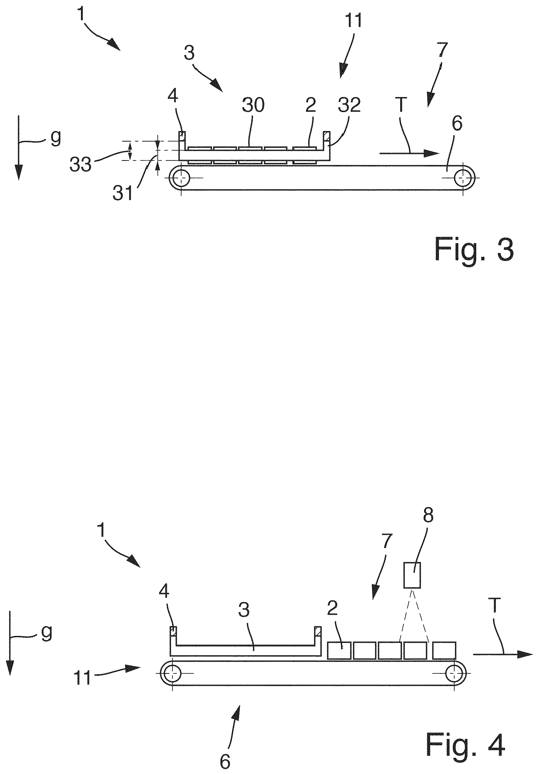

Die Sortierleisten 3 sind identisch ausgebildet und weisen jeweils eine sich quer zu der Förderrichtung F erstreckenden Mittelleiste 30auf, wie in Figur 3 genauer gezeigt.

Zum Fördern der Sortierleisten 3 ist eine im vorliegenden Fall als Förderkette 4 ausgebildete Fördereinheit vorgesehen. Die Förderkette 4 ist in Gravitationsrichtung g gesehen oberhalb der sich von der Sammelaufnahme 10 zur Verschlussentladezone 11 erstreckende Auflage 5 angeordnet.

In der Verschlussentladezone 11 ist ein horizontal ausgerichtetes Transportband 6 vorgesehen, welches in Gravitationsrichtung g gesehen unterhalb der Förderkette 4 und der daran befestigten Sortierleisten 3 verläuft. Das Transportband 6 ist hierbei zum seitlichen Ausräumen von durch die Sortierleisten 3 geförderten Behälterverschlüssen 2 vorgesehen.

Die Auflage 5 bildet die Bewegungsbahn 13 ab, wobei sich das Transportband 6 in Förderrichtung F gesehen direkt an die Auflage 5 anschließt.

Das Transportband 6 ist vorliegend durch die Bewegungskurve 15 umschlossen. Ferner ist das Transportband 6 in die Kaskade des Kaskadenförderers 1 eingearbeitet beziehungsweise in diese integriert.

In Figur 2 ist schematisch eine Draufsicht auf die Verschlussentladezone 11 des Kaskadenförderers 1 aus Figur 1 gezeigt. Aus dieser Ansicht ist deutlich zu erkennen, dass das Transportband 6, welches die Behälterverschlüsse 2 entlang einer Transportrichtung T transportiert, quer zur Förderrichtung F angeordnet ist. Gemäß dieser Ausführungsform ist die Transportrichtung T, welche einer Hauptausrichtung des Transportbandes 6 entspricht, im Wesentlichen senkrecht zur Förderrichtung F ausgerichtet.

Gelangt eine Sortierleiste 3 aus dem Bereich, in welchem sie die Behälterverschlüsse 2 über die Auflage 5 schiebt, wie Figur 1 zu entnehmen ist, in den Bereich des Transportbandes 6, so schiebt diese Sortierleiste 3 die durch sie beförderten Behälterverschlüsse 2 auf das Transportband 6, sodass die Behälterverschlüsse 2 mit ihrem Gewicht auf dem Transportband 6 aufliegen.

Durch die Bewegung des Transportbandes 6 in Transportrichtung T erfahren die Behälterverschlüsse 2 eine Bewegung in Richtung der Transportrichtung T, mithin seitlich beziehungsweise quer zur Förderrichtung F. Dies hat zur Folge, dass die Behälterverschlüsse 2 seitlich aus dem Bereich der Sortierleiste 3 heraus bewegt werden, mit anderen Worten ausgeräumt werden.

Das Transportband 6 erstreckt sich zudem in Transportrichtung T über die Sortierleisten 3 hinaus und bildet neben dem von der Sortierleisten 3 und der Förderkette 4 gebildeten Bereich einen Abtransportabschnitt 7 aus, in welchem die ausgeräumten Behälterverschlüsse 2 weiter in Transportrichtung T transportiert werden.

Um sicherzustellen, dass alle durch die jeweilige Sortierleiste 3 geförderten Behälterverschlüsse 2 aus der Sortierleiste 3 ausgeräumt werden, erstreckt sich, wie aus Figur 2 ersichtlich, das Transportband 6 über die gesamte Breite 34 der Sortierleisten 3.

In Figur 3 ist schematisch eine Vorderansicht der Verschlussentladezone 11 aus Figur 2 gezeigt. Mithin entspricht diese Ansicht einem Ausschnitt einer Schnittansicht des Kaskadenförderers 1 parallel zur Transportrichtung T.

Wie bereits aus Figur 1 zu entnehmen ist, weist die Förderkette 4 im Bereich des Transportbandes 6 zu letzterem eine Entfernung 40 auf, welche größer ist, als eine Höhe 20 der sortierten Behälterverschlüsse 2. Hierbei ist die Entfernung 40 derart bemessen, dass sie eine Summe der maximalen Höhe 20 der Behälterverschlüsse 2 und einem zusätzlichen Sicherheitsbetrag, vorliegend von 20 % der Höhe 20 ist.

Dadurch, dass die Entfernung 40 größer ist als die Höhe 20, können die Behälterverschlüsse 2 durch das Transportband 6 in Transportrichtung T seitlich aus dem Bereich der Sortierleiste 3 heraus transportiert werden, ohne dabei mit der Förderkette 4 zu kollidieren.

Um dennoch ein Fördern der Behälterverschlüsse 2 durch die Sortierleisten 3 zu gewährleisten, erstrecken sich die Sortierleisten 3 von der Förderkette 4 in Richtung der Auflage 5.

Die Sortierleisten 3 sind dabei in eine Mittelleiste 30 und an den beiden Enden der Mittelleiste 30 anschließende Anbindungsabschnitte 32 unterteilt. Die Anbindungsabschnitte 32 weisen eine Erstreckung 33 auf, welche größer ist als Höhe 31 der Mittelleiste 30. Die Mittelleiste 30 ist mithin in Richtung zur Auflage 5 gesehen von der Förderkette 4 beabstandet. Die von der Auflage 5 weg gerichtete Seite der Mittelleiste 30 weist dabei zur Auflage 5 einen Abstand auf, der geringer ist als die Höhe 20 der Behälterverschlüsse 2. Dieser Abstand ist zudem kleiner, als ein Abstand des Schwerpunkts eines Behälterverschlusses 2, wenn dieser nicht mit seinem Boden in Richtung zur Anlage 5 orientiert ist. Dadurch ist es möglich, dass falsch orientierte Behälterverschlüsse 2 im Sortierbereich 12 schwerkraftbedingt von den Sortierleisten 3 fallen, obwohl die Entfernung 40 der Förderkette 4 größer ist, als die Höhe 20 der Behälterverschlüsse 2.

Alternativ oder zusätzlich kann die Entfernung der Förderkette 4 relativ zur Auflage 5 zumindest im Bereich des Sortierbereichs 12 reduziert sein, sodass das Herauskippen falsch orientierter Behälterverschlüsse 2 wie oben beschrieben zusätzlich unterstützt ist. Spätestens im Bereich des Transportbandes 6 ist die Förderkette 4 auf ihre Entfernung 40 so anzuheben, dass die Behälterverschlüsse 2 seitlich aus den Sortierleisten 3 durch das Transportband 6 ausgeräumt werden können.

In Figur 4 ist schematisch eine Vorderansicht einer Verschlussentladezone 11 eines Kaskadenförderers 1 gemäß einer weiteren Ausführungsform gezeigt. Der Kaskadenförderer 1 entspricht im Wesentlichen jenem, welcher in den Figuren 1-3 beschrieben wurde. Der Kaskadenförderer 1 gemäß Figur 4 weist jedoch zusätzlich eine Inspektionseinheit 8 zum Inspizieren von auf dem Transportband 6 transportierten, aus der Sortierleiste 3 ausgeräumten Behälterverschlüssen 2 auf. Die Inspektionseinheit 8 ist mit einer in dieser Figur nicht gezeigten Entferneinheit zum Entfernen von ausgeräumten Behälterverschlüssen 2 von dem Transportband 6 kommunikativ verbunden.

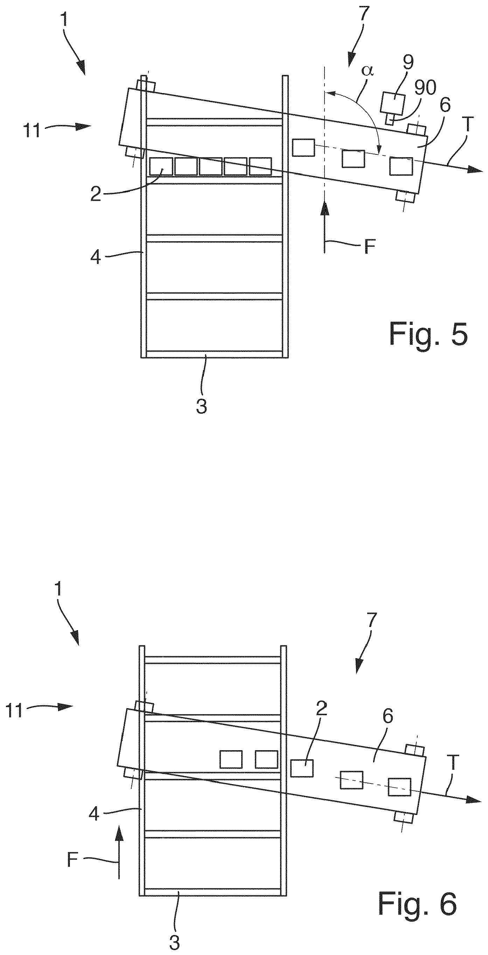

Durch die Inspektionseinheit 8 können fehlerhaft orientierte, schmutzige, oder fehlerhafte, wie etwa verbogene Behälterverschlüsse 2 erkannt werden. Die Entferneinheit wiederum ist dazu eingerichtet, durch die Inspektionseinheit 8 als fehlerhaft auf dem Transportband 6 orientierte und/oder als fehlerbehaftet erkannte ausgeräumte Behälterverschlüsse 2 von dem Transportband 6 zu entfernen. Sie weist hierzu einen mechanischen Auswerfer oder einen pneumatischen Auswerfer auf, welcher einen als fehlerhaft erkannten Behälterverschluss 2 quer zur Transportrichtung T von dem Transportband 6 auswirft, wenn dieser Behälterverschluss 2 an der Entferneinheit vorbeigeführt wird. In Figur 5 ist eine Entferneinheit 9 samt Auswerfer 90 gezeigt.

Figur 5 stellt schematisch eine Draufsicht einer Verschlussentladezone 11 eines Kaskadenförderers 1 gemäß einer weiteren Ausführungsform dar. Der Kaskadenförderer 1 entspricht im Wesentlichen jenem der Figur 1.

Hier schließen das quer zur Förderrichtung F angeordnete Transportband 6 beziehungsweise die Transportrichtung T und die Förderrichtung F einen Winkel α ein, welcher ungleich 90° ist. Im vorliegenden Fall beträgt der Winkel 100°. Mit anderen Worten ist die Transportrichtung T um 10° zu einer Senkrechten zur Förderrichtung F beziehungsweise um 10° zur Längserstreckung der Sortierleisten 3 im Bereich des Transportbandes 6 entgegen der Förderrichtung F geneigt.

Dadurch treten die durch eine Sortierleiste 3 geförderten Behälterverschlüsse 2 nicht alle gleichzeitig mit dem Transportband 6 in Kontakt, sondern zeitversetzt entsprechend der Neigung des Transportbandes 6 zur Senkrechten der Förderrichtung F. Entsprechend werden nicht alle Behälterverschlüsse 2 gleichzeitig durch das Transportband 6 ergriffen, sondern leicht zeitversetzt sukzessive nacheinander.

Figur 6 zeigt schematisch eine weitere Draufsicht der Verschlussentladezone 11 aus Figur 5, wobei die Behälterverschlüsse 2 bereits einen Transport durch das Transportband 6 erfahren haben. Im Vergleich zu der Anordnung der Behälterverschlüsse 2 in Figur 5 ist deutlich zu erkennen, dass der Abstand benachbarter Behälterverschlüsse 2 durch das Transportieren mittels der Transportrichtung 6 im Vergleich zu ihrer Lage im durch die Sortierleiste 3 geförderten Zustand vergrößert ist. Durch diese Vergrößerung des Abstands benachbarter Behälterverschlüsse 2 kann die Weiterbehandlung beziehungsweise weitere Handhabung dieser Behälterverschlüsse 2 im Vergleich zu eng nebeneinanderplatzierten Behälterverschlüssen erleichtert sein.

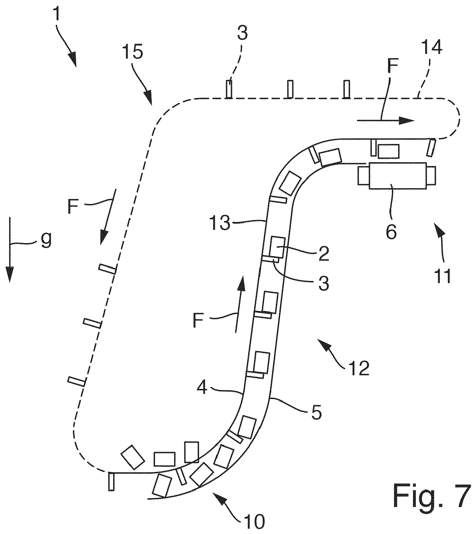

Figur 7 zeigt schematisch eine Seitenansicht eines Kaskadenförderers 1 gemäß einer weiteren Ausführungsform. Der Kaskadenförderer 1 entspricht in seinem Aufbau im Wesentlichen jenem aus Figur 1, wobei in im Unterschied zu diesem sich die Rücktransportbahn 14 in Gravitationsrichtung g gesehen im Wesentlichen oberhalb der Bewegungsbahn 13 erstreckt. Gemäß dieser Ausführungsform werden die Sortierleisten 3 von dem Transportband 6 weg nach oben hin weg bewegt.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Kaskadenförderer
- 2: Behälterverschluss
- 20: Höhe
- 3: Sortierleiste
- 30: Mittelleiste
- 31: Höhe
- 32: Anbindungsabschnitt
- 33: Erstreckung
- 34: Breite
- 4: Förderkette
- 40: Entfernung
- 5: Auflage
- 6: Transportband
- 7: Abtransportabschnitt
- 8: Inspektionseinheit
- 9: Entferneinheit
- 90: Auswerfer
- 10: Sammelaufnahme
- 11: Verschlussentladezone
- 12: Sortierbereich
- 13: Bewegungsbahn
- 14: Rücktransportbahn
- 15: Bewegungskurve

- F: Förderrichtung
- T: Transportrichtung
- α: Winkel
- g: Gravitationsrichtung

## Patentansprüche

1. Kaskadenförderer (1) zum Sortieren und Fördern von Behälterverschlüssen (2), bevorzugt zum Fördern und Sortieren von Schraubverschlüssen in einer Getränkeabfüllanlage, umfassend mindestens eine in einer Förderrichtung (F) bewegbare, quer zur Förderrichtung (F) orientierte Sortierleiste (3) zum Fördern der Behälterverschlüsse (2) von einer unsortierte Behälterverschlüsse (2) aufnehmenden Sammelaufnahme (10) hin zu einer Verschlussentladezone (11),
**dadurch gekennzeichnet, dass**
in der Verschlussentladezone (11) ein in Gravitationsrichtung (g) gesehen unterhalb der Sortierleiste (3) verlaufendes Transportband (6) zum seitlichen Ausräumen von durch die Sortierleiste (3) geförderten Behälterverschlüssen (2) vorgesehen ist.

2. Kaskadenförderer (1) gemäß Anspruch 1, **dadurch gekennzeichnet, dass** die Sortierleiste (3) das Transportband (6) in Förderrichtung (F) überquert, bevorzugt vollständig überquert.

3. Kaskadenförderer (1) gemäß Anspruch 1 oder 2, **dadurch gekennzeichnet, dass** das Transportband (6) in eine Transportrichtung (T) bewegbar ist, wobei die Transportrichtung (T) und die Förderrichtung (F) einen Winkel (a) größer 0° einschließen, bevorzugt größer 0° bis kleiner gleich 120°, wobei der Winkel (a) bevorzugt einen Wert zwischen 90° und 105° aufweist, bevorzugt einen Wert zwischen 90° und 100°, besonders bevorzugt 95°.

4. Kaskadenförderer (1) gemäß einem der vorstehenden Ansprüche, **dadurch gekennzeichnet, dass** das Transportband (6) im Wesentlichen horizontal ausgerichtet ist.

5. Kaskadenförderer (1) gemäß einem der vorstehenden Ansprüche, **dadurch gekennzeichnet, dass** die Sortierleiste (3) entlang einer Bewegungsbahn (13) bewegbar ist, welche die Sammelaufnahme (10) , einen Sortierbereich (12) und die Verschlussentladezone (11) umfasst, wobei die Bewegungsbahn (13) im Bereich der Verschlussentladezone (11) im Vergleich zu dem in Förderrichtung (F) voranstehend angeordneten Sortierbereich (12) eine geringere Steigung aufweist, und wobei insbesondere die Bewegungsbahn (13) im Bereich der Verschlussentladezone (11) einen Neigungswinkel zwischen 0° und 30°, bevorzugt 0° und 5°, aufweist, wobei besonders bevorzugt ist die Bewegungsbahn (13) im Bereich des Transportbandes (6) horizontal ausgerichtet ist.

6. Kaskadenförderer (1) gemäß einem der vorstehenden Ansprüche, **dadurch gekennzeichnet, dass** sich das Transportband (6) über die gesamte Breite (34) der Sortierleiste (3) quer zur Förderrichtung (F) erstreckt, wobei das Transportband (6) sich bevorzugt ferner in Transportrichtung (T) über die Breite (34) der Sortierleiste (3) hinaus entlang eines Abtransportabschnitts (7) zum Abtransportieren von aus der Sortierleiste (3) ausgeräumter Behälterverschlüsse (2) erstreckt.

7. Kaskadenförderer (1) gemäß einem der vorstehenden Ansprüche, **dadurch gekennzeichnet, dass** sich eine Auflage (5) zum Führen der Behälterverschlüsse (2) während des Förderns durch die Sortierleiste (3), erstreckt, bevorzugt zumindest zwischen der Sammelaufnahme (10) und dem Transportband (6), wobei die Auflage (5) bevorzugt im Wesentlichen die Bewegungsbahn (13) abbildet, wobei sich das Transportband (6) in Förderrichtung (F) gesehen bevorzugt direkt an die Auflage (5) anschließt und/oder die Auflage (5) das Transportband (6) teilweise überlappt.

8. Kaskadenförderer (1) gemäß einem der vorstehenden Ansprüche, **dadurch gekennzeichnet, dass** eine Fördereinheit, bevorzugt eine Förderkette (4), zum Fördern der Sortierleiste (3) vorgesehen ist, wobei die Fördereinheit bevorzugt in Gravitationsrichtung (g) gesehen oberhalb der sich zumindest zwischen der Sammelaufnahme (10) und dem Transportband (6) erstreckenden Auflage (5) zum Führen der Behälterverschlüsse (2) während des Förderns durch die Sortierleiste (3) angeordnet ist.

9. Kaskadenförderer (1) gemäß dem vorstehenden Anspruch, **dadurch gekennzeichnet, dass** die Sortierleiste (3) sich von der Fördereinheit in Richtung der Auflage (5) erstreckt, wobei bevorzugt die Sortierleiste (3) mit einem vorgegebenen Abstand zur Auflage (5) und/oder zum Transportband (6) mittels der Fördereinheit gefördert wird, und/oder, dass die Sortierleiste (3) zumindest in einem Teilbereich der Bewegungsbahn (13) auf der Auflage (5) aufliegt und/oder auf dieser geführt ist.

10. Kaskadenförderer (1) gemäß einem beiden vorstehenden Ansprüche, **dadurch gekennzeichnet, dass** die Fördereinheit entlang der Bewegungsbahn (13) zwischen der Sammelaufnahme (10) und dem Transportband (6) zur Auflage (5) und/oder dem Transportband (6) eine vorgegebene bevorzugt gleichbleibende Entfernung (40) aufweist, wobei die Entfernung (40) der Fördereinheit zumindest im Bereich des Transportbandes (6) zumindest auf der Seite der Sortierleiste, an welcher die Behälterverschlüsse (2) ausgeräumt werden, größer ist als eine Höhe (20) der sortierten Behälterverschlüsse (2).

11. Kaskadenförderer (1) gemäß einem der Ansprüche 5 bis 10, **dadurch gekennzeichnet, dass** die Sortierleiste (3) eine sich an die Bewegungsbahn (13) anschließende Rücktransportbahn (14) aufweist, wobei die Bewegungsbahn (13) und die Rücktransportbahn (14) bevorzugt eine geschlossene Bewegungskurve (15) ausbilden.

12. Kaskadenförderer (1) gemäß dem der vorstehenden Anspruch, **dadurch gekennzeichnet, dass** das Transportband (6) durch die Bewegungskurve (15) umschlossen ist, oder dass sich die Rücktransportbahn (14) in Gravitationsrichtung (g) gesehen im Wesentlichen oberhalb der Bewegungsbahn (13) erstreckt.

13. Kaskadenförderer (1) gemäß einem der vorstehenden Ansprüche, **dadurch gekennzeichnet, dass** eine Inspektionseinheit (8) zum Inspizieren von auf dem Transportband (6) transportierter, aus der Sortierleiste (3) ausgeräumter Behälterverschlüsse (2) vorgesehen ist, wobei die Inspektionseinheit (8) bevorzugt mit einer Entferneinheit (9) zum Entfernen von ausgeräumten Behälterverschlüsse (2)n von dem Transportband (6) kommuniziert, wobei die Entferneinheit (9) dazu eingerichtet ist, durch die Inspektionseinheit (8) als fehlerhaft auf dem Transportband (6) orientierte und/oder als fehlerbehaftet erkannte ausgeräumte Behälterverschlüsse (2) von dem Transportband (6) zu entfernen.

14. Verfahren zum Sortieren und Fördern von Behälterverschlüssen (2), bevorzugt zum Fördern und Sortieren von Schraubverschlüssen in einer Getränkeabfüllanlage, umfassend das Fördern der Behälterverschlüsse mittels mindestens einer in einer Förderrichtung (F) bewegbaren, quer zur Förderrichtung (F) orientierten Sortierleiste (3) von einer unsortierte Behälterverschlüsse (2) aufnehmenden Sammelaufnahme (10) hin zu einer Verschlussentladezone (11),
**dadurch gekennzeichnet, dass**
in der Verschlussentladezone (11) ein seitliches Ausräumen der geförderten Behälterverschlüsse (2) mittels eines in Gravitationsrichtung (g) gesehen unterhalb der Sortierleiste (3) verlaufenden Transportbandes (6) erfolgt.
